# EUROPÄISCHE PATENTSCHRIFT

(11) **EP 2 330 021 B1**
(45) Veröffentlichungstag und Bekanntmachung des Hinweises auf die Patenterteilung: **22.08.2012**
(21) Anmeldenummer: 10188789.1
(22) Anmeldetag: 26.10.2010
(51) Int. Cl.: B62D 25/10, E04C 2/08, E04C 2/34

(54) **Flächiges Karosserieelement in Sandwichbauweise**
Planar body element in sandwich design
Elément de carrosserie plat en sandwich

(30) Priorität: 07.12.2009 DE 102009056969
(43) Veröffentlichungstag der Anmeldung: 08.06.2011
(73) Patentinhaber: CLAAS Selbstfahrende Erntemaschinen GmbH, 33428 Harsewinkel (DE)
(72) Erfinder: Brockmann, Maik, 48231, Warendorf (DE); Niermann, Martin, 33428, Harsewinkel (DE); Theißing, Gerd, 33428, Harsewinkel (DE); Jaspers, Helge, 44795, Bochum (DE); Meyer zu Rheda, Georg, 33428, Harsewinkel (DE); Buchmann, Markus, 33428, Harsewinkel (DE)

(56) Entgegenhaltungen:
- DE-A1- 10 203 276
- DE-A1- 19 508 421
- US-A- 3 256 669

## Beschreibung

Die vorliegende Erfindung betrifft ein flächiges Karosserieelement in Sandwichbauweise, insbesondere für eine selbstfahrende Erntemaschine, wobei das Karosserieelement eine Unterschale und eine Oberschale aufweist, die parallel und beabstandet zueinander angeordnet sind, und zwischen denen jeweils mindestens ein Zwischenblech angeordnet ist.

Selbstfahrende Erntemaschinen, wie beispielsweise Feldhäcksler oder Mähdrescher, weisen großflächige, im Wesentlichen ebene Karosserieelemente auf, die sich durch eine hohe Steifigkeit auszeichnen müssen, damit sie beispielsweise durch eine Person begehbar sind. Als ein Beispiel für ein derartiges Karosserieelement sei eine Motorabdeckung genannt, die sich im Wesentlichen horizontal zumindest abschnittsweise über die Oberseite eines Feldhäckslers oder Mähdreschers erstreckt.

Aus der DE 195 08 421 A1 ist ein Leichtbauelement in Blechverbundbauweise oder Sandwichbauweise bekannt, welches aus einer Rippenplatte im Verbund mit zwei beidseitig angeordneten Deckplatten besteht, die durch die Rippenplatte zueinander beabstandet gehalten werden. Die Rippenplatte weist eine Rippenstruktur auf, die durch das Ausschneiden von Feldern mit einem vorgegebenen Konturverlauf aus einem Rippenplattenblech hergestellt wird. Die Deckplatten sind mit der Rippenplatte an den Kontaktzonen verbunden.

Als nachteilig an diesem Leichtbauelement erweist sich, dass zum einen ein hoher Materialüberschuss anfällt, der in Abhängigkeit von der erforderlichen Beabstandung der beiden Deckplatten zueinander stark variiert. Zum anderen bilden die Ausschnitte innerhalb der Rippenstruktur deutliche Schwachstellen, die bei einer Begehung des Leichtbauelementes durch eine Person eingedrückt werden können.

Die gattungsbildenden DE 102 03 276 A1 beschreibt ein Leichtbauelement in Sandwichbauweise. Das Leichtbauelement umfasst zwischen zwei äußeren Decklagen eine innere Materiallage. Die innere Materiallage weist auf ihrer Oberfläche beabstandete, eine geschlossene Kontur aufweisende Vertiefungen auf, die geradlinig fluchtend angeordnet sind. Die Anordnung der Vertiefungen auf einer geradlinigen Bahn bildet Knicklinien aus, die es ermöglichen, das Leichtbauelement durch Knicken entlang einer der geradlinigen Bahn abzuwinkeln und die aneinander stoßenden Konturen miteinander durch Kleben oder dergleichen zu verbinden, da sich hier große Anlageflächen ausbilden.

Der vorliegenden Erfindung liegt daher die Aufgabe zu Grunde, ein Karosserieelement, insbesondere für eine Selbstfahrende Erntemaschine, derart weiter zu bilden, dass es kostengünstig herstellbar ist und sich durch eine hohe Steifigkeit und Festigkeit auszeichnet, ohne den Gedanken der Leichtbauweise zu verlassen.

Die Aufgabe wird erfindungsgemäß dadurch gelöst, dass das Karosserieelement mindestens eine Unterschale und eine Oberschale aufweist, die parallel und beabstandet zueinander angeordnet sind, und zwischen denen jeweils mindestens ein Zwischenblech angeordnet ist, welches auf seiner Oberfläche mit zueinander beabstandeten, eine geschlossene Kontur aufweisenden Vertiefungen, die entlang von Kreisbahnen auf der Oberfläche des Zwischenbleches angeordnet sind, versehen ist, wobei die Vertiefungen derart auf der Oberfläche des Zwischenbleches verteilt angeordnet sind, dass sich auf Grund von Zwischenräumen zwischen den zueinander beabstandeten Vertiefungen keine durchgehenden, geraden Biegelinien in dem Karosserieelement ausbilden können. Das flächendeckende Einformen von Vertiefungen in die Oberfläche des Zwischenbleches ermöglicht eine gleichmäßige Aufnahme und Verteilung von Druckkräften, die über die Oberschale auf das Karosserieelement eingeleitet werden. Dadurch ist die Anforderung an die Begehbarkeit des Karosserieelementes gewahrt, die eine punktuelle Belastung der Oberfläche des Karosserieelementes darstellt. Des Weiteren ist es von Vorteil, dass der Umformprozess des Zwischenbleches ohne Materialüberschuss durchführbar ist, was gegenüber dem eingangs beschriebenen Stand der Technik kostengünstiger ist.

Insbesondere können die Kreisbahnen Krümmungsradien aufweisen, die dem 25-fachen bis 50-fachen des Durchmessers einer Vertiefung entsprechen.

Dabei kann der Abstand der Mittelpunkte der Krümmungsradien der Kreisbahnen dem 50-fachen bis 70-fachen des Durchmessers einer Vertiefung entsprechen. Diese Abmessungen und diese geometrische Anordnung haben sich als besonders vorteilhaft erwiesen, um eine größtmögliche Stabilität des Karosserieelementes bei Verwendung möglichst dünnwandiger Bleche für Oberschale, Unterschale und Zwischenblech zu erreichen.

Hierzu können die Kreisbahnen konzentrisch auf der Oberfläche angeordnet sein.

Vorzugsweise weisen die Vertiefungen eine zylindrische Kontur auf. Die zylindrische Kontur der Vertiefungen ist besonders gut dazu geeignet, auftretende Druckkräfte gleichmäßig auf das Zwischenblech und die darunter liegende Unterschale zu verteilen.

Dabei können die Vertiefungen eine polygone oder auch eine kreisförmige Kontur aufweisen. In besonders bevorzugter Weiterbildung weisen die Vertiefungen eine kegelstumpfförmige Kontur auf.

Alternativ können die Vertiefungen eine kugelsegmentförmige Kontur aufweisen. Die kugelsegmentförmigen Vertiefungen können dabei auf ihrer der Oberschale zugewandten Seite eine Abflachung oder Abplattung aufweisen, um die Aufstandsfläche, auf der die Oberschale aufliegt, zu vergrößern.

Vorteilhafter Weise kann die Wandstärke der Schalen weniger als 1 mm betragen.

Des Weiteren kann die Wandstärke des Zwischenbleches weniger als 0,5 mm betragen. Die Erfindungsgemäße Ausgestaltung der Zwischenbleche ermöglicht eine Reduzierung der Wandstärke ohne die Steifigkeit oder Festigkeit des Karosserieelementes zu beeinflussen. Die Reduzierung der Wandstärken der Schalen sowie des Zwischenbleches geht entsprechend mit einer entsprechenden Reduzierung des Gesamtgewichtes des Karosserieelementes einher.

Insbesondere kann das Zwischenblech durch Verkleben und/ oder Verschweißen mit der jeweiligen Unterschale und Oberschale verbindbar sein. Hierbei werden die jeweiligen Kontaktflächen zwischen der Unterschale und dem Zwischenblech bzw. dem Zwischenblech und der Oberschale miteinander verklebt beziehungsweise punktschweißend miteinander verbunden.

Vorteilhafter Weise kann das Zwischenblech als Edelstahlfolie ausgeführt sein. Edelstahlfolie zeichnet sich durch eine hohe Festigkeit und damit Belastbarkeit bei Umformprozessen aus, sodass mit entsprechend geringen Materialdicken gearbeitet werden kann.

In vorteilhafter Weiterbildung kann die Höhe der Vertiefungen des Zwischenbleches an die Art und die Verwendung des Karosserieelementes an der selbstfahrenden Erntemaschine anpassbar sein. Die Anpassbarkeit der Höhe der napfförmigen Vertiefungen des Zwischenbleches ermöglicht insbesondere den Einsatz des erfindungsgemäßen Karosserieelementes an den Stellen einer selbstfahrenden Erntemaschine, die einer Biege- und Torsionsbelastung ausgesetzt sind. Beispielhaft seien als Anwendungsgebiet für das erfindungsgemäße Karosserieelement die Motorabdeckung, der Korntankdeckel, Laufstege sowie das Schüttlerhaus einer selbstfahrenden Erntemaschine genannt.

Die Erfindung wird nachstehend anhand eines in den Zeichnungen dargestellten Ausführungsbeispieles näher erläutert.

Es zeigen:
- Fig. 1: einen Mähdrescher in einer perspektivischen Teildarstellung von hinten;
- Fig. 2: eine schematisierte Ansicht eines erfindungsgemäßen Zwischenblech von oben;
- Fig. 3: eine Schnittansicht entlang der Linie II-II des Zwischenbleches gemäß Fig. 2.

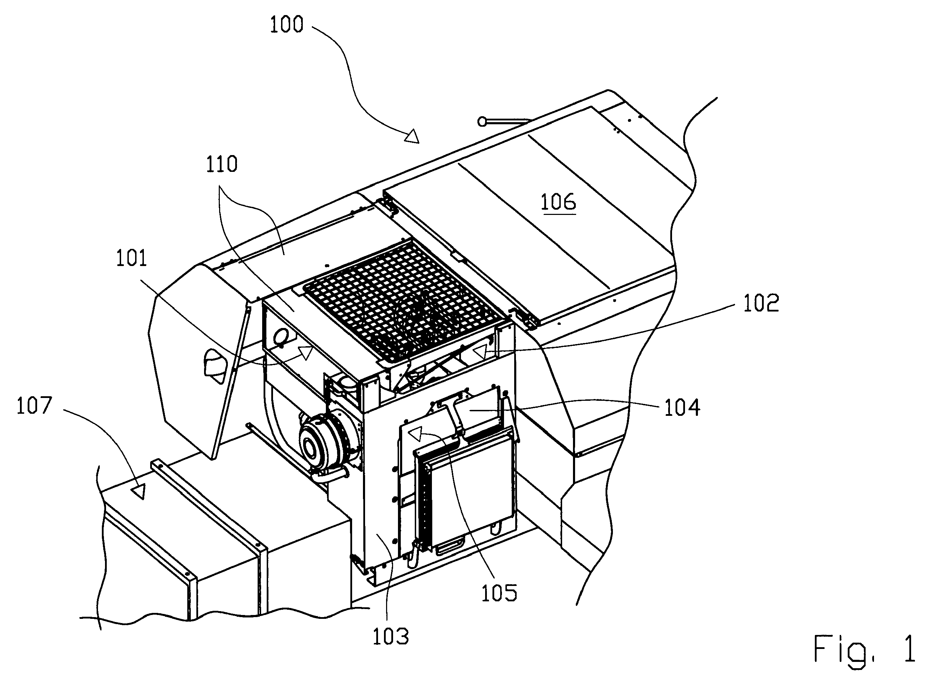

Fig. 1 stellt eine perspektivische Teilansicht auf eine selbstfahrende landwirtschaftliche Erntemaschine, hier eines Mähdreschers 100, dar. Der Mähdrescher 100 weist eine Motorabdeckung 101 auf, die in einer Verschlussstellung VS dargestellt ist, in der sie einen Motorraum 102 des Mähdreschers 100 und einen Verbrennungsmotor von oben abdeckt. Der Motorraum 102 ist zu seiner rechten Seite durch eine seitliche Wandung 103 begrenzt, die einen Öffnungsquerschnitt 104 zur Installation eines nicht sichtbaren Radiallüfters sowie einer innenliegenden Kühlereinheit 105 aufweist. Die Motorabdeckung 101 ist hinter einem vorderen Korntank 106 und vor einem hinteren tiefer liegenden Schüttlerhaus 107 angeordnet. Die Motorabdeckung 101 besteht im Wesentlichen aus einem flächigen Karosserieelement 110, welches in Sandwichbauweise ausgeführt ist.

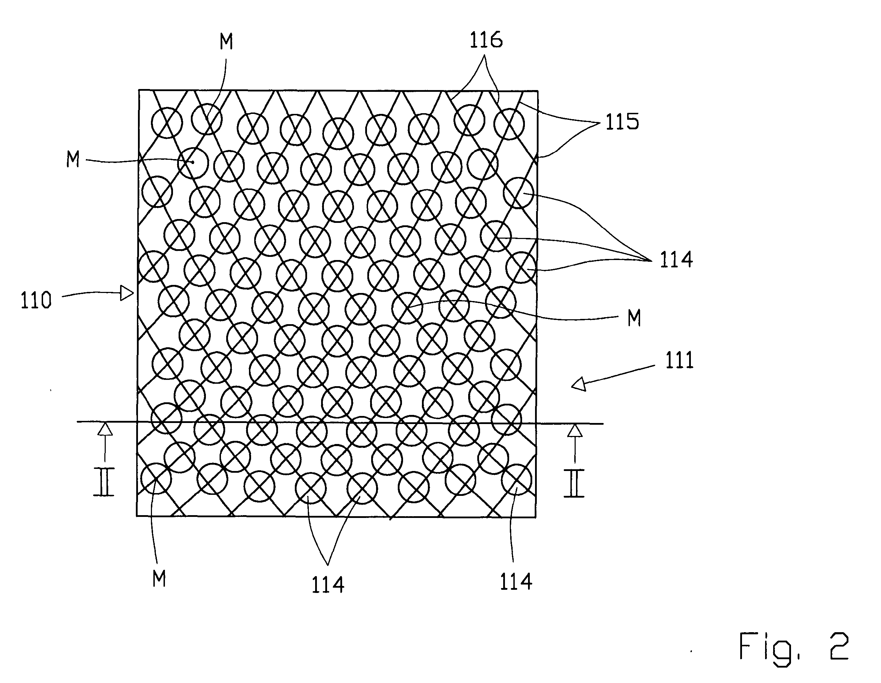

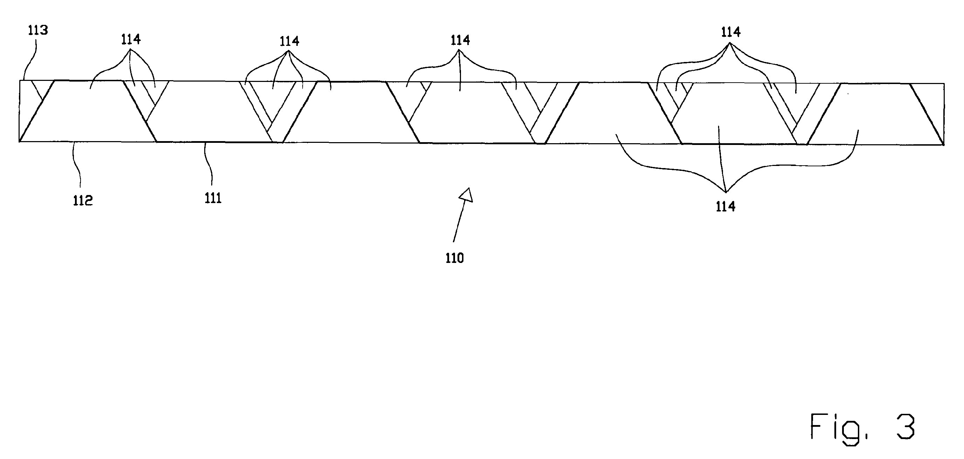

Mit Bezug auf die Darstellung in den Fig. 2 und 3 wird der strukturelle Aufbau eines erfindungsgemäßen Karosserieelementes 110 beschrieben. Die Darstellung in Fig. 2 zeigt eine schematisierte Ansicht eines Zwischenbleches 111 des Karosserieelementes 110 in einer Draufsicht. Fig. 3 zeigt eine Schnittansicht des Zwischenbleches 111 entlang der Linie II-II gemäß Fig. 2. Das Karosserieelementes 110 weist eine Unterschale 112 sowie eine Oberschale 113 auf, zwischen denen das mindestens eine Zwischenblech 111 angeordnet ist, wie in Fig. 3 angedeutet ist. Das Zwischenblech 111 ist ein der räumlichen Ausdehnung der Oberfläche des Karosserieelementes 110 entsprechendes und an die Kontur des Karosserieelementes 110 angepasstes dünnwandiges Blech, vorzugsweise aus Edelstahlfolie. Die Oberfläche des Zwischenbleches 111 wird in einem Umformprozess derart gestaltet, dass sich flächendeckend über das Zwischenblech 111 verteilt angeordnete, gleichgerichtete Vertiefungen 114 ausbilden. Die Vertiefungen 114 weisen eine geschlossene Kontur auf, die zylindrisch ausgeführt ist. Vorzugsweise sind die Vertiefungen 114 kegelstumpfförmig gestaltet. Weiterhin können die Vertiefungen 114 eine polygone oder kreiszylinderförmige sowie eine kugelsegmentförmige Kontur aufweisen.

Die räumliche Verteilung der Vertiefungen 114 auf der Oberfläche des Zwischenbleches 111 ist derart gewählt, dass sich auf Grund der Zwischenräume zwischen den zueinander beabstandeten Vertiefungen 114 keine durchgehenden, geraden Biegelinien im Zwischenblech 111 und damit im Karosserieelement 110 ausbilden können. Hierzu erfolgt die Umformung des Zwischenbleches 111 zur Ausbildung der Vertiefungen 114 entlang von Kreisbahnen, die in Quer- und in Längsrichtung jeweils verschiedene Radien aufweisen und mit unterschiedlichen Ausrichtungen zueinander auf der Oberfläche des Zwischenbleches 111 verlaufen. Beispielhaft sind die Kreisbahnen, entlang derer die Vertiefungen 114 auf der Oberfläche des Zwischenbleches 111 angeordnet sein können, zu ihrer Visualisierung durch Hilfslinien 115 und 116 angedeutet. Bedingt durch die Ausbildung der Vertiefungen 114 entlang verschiedener Kreisbahnen 115, 116 variieren die Abstände der Vertiefungen 114 in Quer- und Längsrichtung zueinander. Die Kreisbahnen °115, °116 weisen Krümmungsradien auf, die dem 25-fachen bis 50-fachen des Durchmessers einer Vertiefung**°**114 entsprechen. Dabei entspricht der Abstand der Mittelpunkte der Krümmungsradien der Kreisbahnen **°**115, **°**116 dem 50-fachen bis 70-fachen des Durchmessers einer Vertiefung **°**114.

Der Mittelpunkt M einer Vertiefung 114 kann dabei mit dem Verlauf zumindest einer Kreisbahn 115, 116 zusammenfallen. Die Abstände zwischen den entlang zumindest einer Kreisbahn 115, 116 angeordneten Vertiefungen 114 können gleich sein oder variieren. Der durch diese Anordnung der Vertiefungen 114 erreichbare Effekt in Bezug auf die Biegesteifigkeit des Karosserieelementes 110 wird in der Teilschnittansicht gemäß Fig. 3 deutlich. Eine symmetrische Anordnung von Vertiefungen in Längs- und Querrichtung des Zwischenbleches würde dazu führen, dass sich zwischen den Vertiefungen in Längs- und Querrichtung durchgehende, gerade Biegelinien ausbilden, um die bei einer Belastung des Karosserieelementes ein Einknicken des Selben erfolgt. Die entsprechend des Verlaufes der Kreisbahnen 115, 116 vorgesehene Anordnung lässt die Bildung einer durchgehenden, geraden Biegelinie nicht zu, wie aus Fig. 3 zu erkennen. Es ist nahezu nicht möglich in Quer- und Längsrichtung des erfindungsgemäßen Karosserieelementes 110 durch die Zwischenräume zwischen benachbarten Vertiefungen 114 hindurchzublicken. Dementsprechend bilden sich auch keine durchgehenden, geraden Biegelinien aus, die eine Schwachstelle des Karosserieelementes 110 bilden könnten.

Die Sandwichbauweise des Karosserieelementes 110 unter Verwendung des mindestens einen Zwischenbleches111 erlaubt eine Reduzierung der Wandstärken der Oberschale 113, der Unterschale 112 und des mindestens einen Zwischenbleches 111. So weisen die Oberschale 113 und die Unterschale 112 jeweils eine Wandstärke von weniger als 1 mm auf, während das mindestens eine Zwischenblech 111 eine Wandstärke unterhalb von 0,5 mm aufweist. Die durch die spezifische Ausgestaltung des mindestens einen Zwischenbleches 111 erreichbar Steifigkeit des Karosserieelementes 110 erlaubt eine Reduzierung der Wandstärken, was mit einer Gewichtsersparnis einhergeht.

Das Verbinden von Unterschale 112, Zwischenblech 111 und Oberschale 113 miteinander erfolgt durch Verkleben und /oder Verschweißen. Hierzu kann das Zwischenblech 111 an den flächigen Bereichen um die Vertiefungen 114 herum mit der Unterschale 112 verklebt oder verschweißt werden, während die Oberseiten der Vertiefungen 114, die auf Grund ihrer kegelstumpfförmigen Kontur eine ebene Oberfläche oder bei einer beispielsweise kugelförmigen Kontur der Vertiefungen 114 eine Abplattung aufweisen, mit der Oberschale 113 verschweißt oder verklebt werden.

### Bezugszeichenliste:

- 100: Mähdrescher
- 101: Motorabdeckung
- 102: Motorraum
- 103: Wandung
- 104: Öffnungsquerschnitt
- 105: Kühlereinheit
- 106: Korntank
- 107: Schüttlerhaus
- 110: Karosserieelement
- 111: Zwischenblech
- 112: Unterschale
- 113: Oberschale
- 114: Vertiefung
- 115: Hilfslinie Kreisbahn
- 116: Hilfslinie Kreisbahn
- M: Mittelpunkt einer Sicke
- VS: Verschlussstellung

## Patentansprüche

1. Flächiges Karosserieelement (110) in Sandwichbauweise, wobei das Karosserieelement (110) eine Unterschale (112) und eine Oberschale (113) aufweist, die parallel und beabstandet zueinander angeordnet sind, und zwischen denen mindestens ein Zwischenblech (111) angeordnet ist, **dadurch gekennzeichnet, dass** das mindestens eine Zwischenblech (111) auf seiner Oberfläche mit zueinander beabstandeten, eine geschlossene Kontur aufweisenden Vertiefungen (114), die entlang von Kreisbahnen (115, 116) auf der Oberfläche des Zwischenbleches (111) angeordnet sind, versehen ist, wobei die Vertiefungen (114) derart auf der Oberfläche des Zwischenbleches (111) verteilt angeordnet sind, dass sich auf Grund von Zwischenräumen zwischen den zueinander beabstandeten Vertiefungen (114) keine durchgehenden, geraden Biegelinien in dem Karosserieelement (110) ausbilden können.

2. Karosserieelement (110) nach Anspruch 1, **dadurch gekennzeichnet, dass** die Kreisbahnen (115, 116) konzentrisch auf der Oberfläche des Zwischenbleches (111) angeordnet sind.

3. Karosserieelement (110) nach einem der Ansprüche 1 oder 2, **dadurch gekennzeichnet, dass** die Kreisbahnen (115, 116) Krümmungsradien aufweisen, die dem 25-fachen bis 50-fachen des Durchmessers einer Vertiefung (114) entsprechen.

4. Karosserieelement (110) nach einem der Ansprüche 1 bis 3, **dadurch gekennzeichnet, dass** der Abstand der Mittelpunkte der Krümmungsradien der Kreisbahnen (115, 116) dem 50-fachen bis 70-fachen des Durchmessers einer Vertiefung (114) entsprechen.

5. Karosserieelement (110) nach einem der Ansprüche 1 bis 4 , **dadurch gekennzeichnet, dass** die Vertiefungen (114) eine zylindrische Kontur aufweisen.

6. Karosserieelement (110) nach Anspruch 5 , **dadurch gekennzeichnet, dass** die Vertiefungen (114) eine polygone Kontur aufweisen.

7. Karosserieelement (110) nach Anspruch 5 , **dadurch gekennzeichnet, dass** die Vertiefungen (114) eine kegelstumpfförmige Kontur aufweisen.

8. Karosserieelement (110) nach einem der Ansprüche 1 bis 5, **dadurch gekennzeichnet, dass** die Vertiefungen (114) eine kugelsegmentförmige Kontur aufweisen.

9. Karosserieelement (110) nach einem der Ansprüche 1 bis 8,
**dadurch gekennzeichnet, dass** die Wandstärke der Ober- und Unterschale (112, 113) weniger als 1 mm beträgt.

10. Karosserieelement (110) nach einem der Ansprüche 1 bis 9 ,
**dadurch gekennzeichnet, dass** die Wandstärke des Zwischenbleches (111) weniger als 0,5 mm beträgt.

11. Karosserieelement (110) nach einem der Ansprüche 1 bis 10 ,
**dadurch gekennzeichnet, dass** das Zwischenblech (111) durch Verkleben und/ oder Verschweißen mit der der jeweiligen Unterschale (112) beziehungsweise Oberschale (113) verbindbar ist.

12. Karosserieelement (110) nach einem der Ansprüche 1 bis 11 ,
**dadurch gekennzeichnet, dass** das Zwischenblech (111) als Edelstahlfolie ausgeführt ist.

## Claims

1. A planar bodywork element (110) of a sandwich structure, wherein the bodywork element (110) has a lower shell (112) and an upper shell (113) which are arranged in parallel mutually spaced relationship and between which is arranged at least one intermediate sheet (111), **characterised in that** the at least intermediate sheet (111) is provided on its surface with mutually spaced recesses (114) which are of a closed contour and which are arranged along circular paths (115, 116) on the surface of the intermediate sheet (111), wherein the recesses (114) are arranged distributed on the surface of the intermediate sheet (111) in such a way that no continuous straight bend lines can be formed in the bodywork element (110) by virtue of intermediate spaces between the mutually spaced recesses (114).

2. A bodywork element (110) according to claim 1 **characterised in that** the circular paths (115, 116) are arranged concentrically on the surface of the intermediate sheet (111).

3. A bodywork element (110) according to one of claims 1 and 2 **characterised in that** the circular paths (115, 116) have radii of curvature corresponding to 25 times to 50 times the diameter of a recess (114).

4. A bodywork element (110) according to one of claims 1 to 3 **characterised in that** the spacing of the centre points of the radii of curvature of the circular paths (115, 116) correspond to 50 times to 70 times the diameter of a recess (114).

5. A bodywork element (110) according to one of claims 1 to 4 **characterised in that** the recesses (114) have a cylindrical contour.

6. A bodywork element (110) according to claim 5 **characterised in that** the recesses (114) have a polygonal contour.

7. A bodywork element (110) according to claim 5 **characterised in that** the recesses (114) have a frustoconical contour.

8. A bodywork element (110) according to one of claims 1 to 5 **characterised in that** the recesses (114) have a contour in the form of a segment of a sphere.

9. A bodywork element (110) according to one of claims 1 to 8 **characterised in that** the wall thickness of the upper and lower shells (112, 113) is less than 1 mm.

10. A bodywork element (110) according to one of claims 1 to 9 **characterised in that** the wall thickness of the intermediate sheet (111) is less than 0.5 mm.

11. A bodywork element (110) according to one of claims 1 to 10 **characterised in that** the intermediate sheet (111) can be connected by glueing and/or welding to the respective lower shell (112) and upper shell (113) respectively.

12. A bodywork element (110) according to one of claims 1 to 11 **characterised in that** the intermediate sheet (111) is in the form of a high-quality steel film.

## Revendications

1. Élément de carrosserie plat (110) en construction sandwich, lequel élément de carrosserie (110) présente une coque inférieure (112) et une coque supérieure (113) qui sont disposées parallèlement et à distance l'une de l'autre, et entre lesquelles est disposée au moins une tôle intermédiaire (111), **caractérisé en ce que** ladite au moins une tôle intermédiaire (111) est pourvue, sur sa surface, de creux (114) espacés les uns des autres, présentant un contour fermé, qui sont disposés le long de trajectoires circulaires (115, 116) sur la surface de la tôle intermédiaire (111), les creux (114) étant répartis sur la surface de la tôle intermédiaire (111) de manière qu'il ne puisse pas se former, dans l'élément de carrosserie (110), de lignes de pliage rectilignes continues dues à des espaces entre les creux (114) espacés les uns des autres.

2. Élément de carrosserie (110) selon la revendication 1, **caractérisé en ce que** les trajectoires circulaires (115, 116) sont disposées concentriquement sur la surface de la tôle intermédiaire (111).

3. Élément de carrosserie (110) selon une des revendications 1 ou 2, **caractérisé en ce que** les trajectoires circulaires (115, 116) présentent des rayons de courbure qui correspondent à 25 fois à 50 fois le diamètre d'un creux (114).

4. Élément de carrosserie (110) selon une des revendications 1 à 3, **caractérisé en ce que** la distance des centres des rayons de courbure des trajectoires circulaires (115, 116) correspondent à 50 fois à 70 fois le diamètre d'un creux (114).

5. Élément de carrosserie (110) selon une des revendications 1 à 4, **caractérisé en ce que** les creux (114) présentent un contour cylindrique.

6. Élément de carrosserie (110) selon la revendication 5, **caractérisé en ce que** les creux (114) présentent un contour polygonal.

7. Élément de carrosserie (110) selon la revendication 5, **caractérisé en ce que** les creux (114) présentent un contour tronconique.

8. Élément de carrosserie (110) selon une des revendications 1 à 5, **caractérisé en ce que** les creux (114) présentent un contour en forme de segment sphérique.

9. Élément de carrosserie (110) selon une des revendications 1 à 8, **caractérisé en ce que** l'épaisseur de paroi des coques supérieure et inférieure (112, 113) est inférieure à 1 mm.

10. Élément de carrosserie (110) selon une des revendications 1 à 9, **caractérisé en ce que** l'épaisseur de paroi de la tôle intermédiaire (111) est inférieure à 0,5 mm.

11. Élément de carrosserie (110) selon une des revendications 1 à 10, **caractérisé en ce que** la tôle intermédiaire (111) peut être assemblée avec la coque inférieure (112) et la coque supérieure (113) respective par collage et/ou soudage.

12. Élément de carrosserie (110) selon une des revendications 1 à 11, **caractérisé en ce que** la tôle intermédiaire (111) est réalisée sous la forme d'une feuille d'acier fin.
